# EUROPÄISCHE PATENTSCHRIFT

(11) **EP 3 156 284 B1**
(45) Veröffentlichungstag und Bekanntmachung des Hinweises auf die Patenterteilung: **07.11.2018**
(21) Anmeldenummer: 16189775.6
(22) Anmeldetag: 20.09.2016
(51) Int. Cl.: B60R 5/04

(54) **SCHUTZVORRICHTUNG FÜR EINEN LADERAUM EINES KRAFTFAHRZEUGS**
PROTECTIVE DEVICE FOR A LOADING SPACE OF A MOTOR VEHICLE
DISPOSITIF DE PROTECTION D'ESPACE DE CHARGEMENT DE VEHICULE AUTOMOBILE

(30) Priorität: 16.10.2015 DE 102015220192
(43) Veröffentlichungstag der Anmeldung: 19.04.2017
(73) Patentinhaber: BOS GmbH & Co. KG, 73760 Ostfildern (DE)
(72) Erfinder: Maier, Matthias, 73733 Esslingen (DE)
(74) Vertreter: Patentanwälte Ruff, Wilhelm, Beier, Dauster & Partner mbB

(56) Entgegenhaltungen:
- DE-A1- 10 218 839
- DE-A1- 10 357 153
- DE-A1-102009 010 967

## Beschreibung

Die Erfindung betrifft eine Schutzvorrichtung für einen Laderaum eines Kraftfahrzeugs mit einer formstabilen Aufnahmestruktur, in der eine Wickelwelle drehbar gelagert ist, auf der ein flexibles Flächengebilde auf- und abwickelbar gehalten ist, das an einem in Abwickelrichtung vorderen Stirnendbereich mit einem formstabilen Auszugprofil versehen ist, das an seinen gegenüberliegenden Stirnseiten mit jeweils einem Mitnehmer verbunden ist, der in einem in Längsrichtung des Laderaumes erstreckten Führungsabschnitt einer laderaumfesten Führungsspur linearbeweglich geführt ist.

Eine Schutzvorrichtung ist in Form einer Laderaumabdeckung für einen Laderaum eines Personenkraftwagens aus der DE 10 2014 211 163 A1 bekannt. Die Laderaumabdeckung weist ein Kassettengehäuse auf, in dem eine Wickelwelle drehbar gelagert ist. Auf der Wickelwelle ist eine flexible Abdeckplane auf- und abwickelbar gehalten, die in einer aufgewickelten Ruheposition in dem Kassettengehäuse abgelegt ist. In einer ausgezogenen Schutzposition ist die Abdeckplane etwa horizontal zu einem Heckbereich des Personenkraftwagens hin ausgezogen. Die Abdeckplane weist an ihrem in Auszugrichtung vorderen Stirnendbereich ein formstabiles Auszugprofil auf, das in ausgezogener Funktionsposition in laderaumfeste Halterungen einhängbar ist. Das Kassettengehäuse ist zwischen seiner Funktionsstellung, in der die Abdeckplane etwa horizontal nach hinten ausgezogen werden kann, und einer Ruhestellung, in der das Kassettengehäuse in einen Laderaumboden abgesenkt ist, in Hochrichtung des Laderaumes verlagerbar. Die Abdeckplane wird in der Funktionsstellung des Kassettengehäuses manuell ausgezogen, in die laderaumfesten Halterungen eingehängt und in entsprechend umgekehrter Weise auch manuell wieder in die aufgewickelte Ruheposition innerhalb des Kassettengehäuses zurückgeführt. Hierzu ist der Wickelwelle eine mechanische Rückholfeder zugeordnet.

Aus der EP 1 084 907 B1 ist eine Schutzvorrichtung für einen Laderaum eines Kraftfahrzeugs nach dem Oberbegriff des Anspruchs 1 bekannt, bei der ein formstabiles Auszugprofil einer Abdeckplane mit seinen gegenüberliegenden Stirnseiten in seitlichen Führungsschienen geführt ist. Jede Stirnseite des Auszugprofils ist jeweils in einem Mitnehmer gehalten, der in der Führungsschiene längsverschiebbar geführt ist. Zur Verlagerung der Mitnehmer sind Antriebskabel vorgesehen, die synchronisiert über einen Antriebsmotor in den Führungsschienen verlagert werden.

Aufgabe der Erfindung ist es, eine Schutzvorrichtung der eingangs genannten Art zu schaffen, die eine verbesserte Funktionalität sowie einen hohen Komfort für Bedienpersonen oder Fahrzeuginsassen aufweist.

Diese Aufgabe wird durch die Merkmale des Anspruchs 1 gelöst. Unter der Aufnahmestruktur für die Wickelwelle und das flexible Flächengebilde in aufgewickeltem Zustand ist ein zumindest weitgehend geschlossenes Gehäuse, oder auch ein offener, kastenförmiger Rahmen oder eine ähnlich gestaltete, formstabile Profilstruktur zu verstehen.

Durch die erfindungsgemäße Lösung kann die Aufnahmestruktur, vorzugsweise ein Kassettengehäuse, bei Nichtbedarf in einen Laderaumboden hinein abgesenkt werden, so dass die Platzverhältnisse des Laderaumes in der versenkten Ruhestellung der Aufnahmestruktur durch die Aufnahmestruktur nicht beeinträchtigt werden. Erfindungsgemäß kann eine vollautomatische Bedienung der verschiedenen Funktionen der Schutzvorrichtung vorgesehen sein, indem sowohl die Verlagerung der Mitnehmer auf gegenüberliegenden Seiten des Auszugprofils als auch die Höhenverlagerung der Aufnahmestruktur über einen Antrieb erfolgt. Erfindungsgemäß bewirkt zudem die Bewegung der Mitnehmer automatisch eine entsprechende Höhenverlagerung der Aufnahmestruktur, sobald die Mitnehmer sich im Bereich gegenüberliegender Stirnseiten der Aufnahmestruktur vorbeibewegen. Die erfindungsgemäße Lösung eignet sich in besonders vorteilhafter Weise für die Gestaltung der Schutzvorrichtung als Laderaumabdeckung für einen Personenkraftwagen. Die erfindungsgemäße Lösung kann in gleicher Weise eingesetzt werden zur Abdeckung einer Ladefläche eines Lastkraftwagens oder eines Pickups. Alternativ kann die erfindungsgemäße Schutzvorrichtung im Bereich eines offenen oder geschlossenen Laderaumes eines Schienenfahrzeugs vorgesehen sein.

In Ausgestaltung der Erfindung weist die Kopplungseinrichtung eine Fangkulisse für das Auszugprofil auf, in die das Auszugprofil eintaucht abhängig von der Position des Mitnehmers. Die Fangkulisse ist vorzugsweise fest an der Aufnahmestruktur angeordnet. Vorteilhaft ist im Bereich der gegenüberliegenden Stirnseiten des Auszugprofils jeweils eine Fangkulisse pro Stirnseite vorgesehen, wobei die gegenüberliegenden Fangkulissen identisch zueinander ausgeführt sind. Besonders bevorzugt sind die beiden Fangkulissen in Seitenteilen der Aufnahmestruktur integriert, die vorzugsweise als Führungsschlitten zur Höhenverlagerung der Aufnahmestruktur ausgebildet sind.

In weiterer Ausgestaltung der Erfindung weist die Kopplungseinrichtung eine Verriegelungseinrichtung auf, die die Aufnahmestruktur in einer Funktionsstellung sichert. Die Verriegelungseinrichtung ist vorzugsweise mechanisch ausgeführt. Dies bedeutet, dass eine Verriegelung durch mechanisch ineinandergreifende Glieder, Teile oder Abschnitte erfolgt. Alternativ ist eine magnetische oder elektromagnetische Verriegelung vorgesehen.

In weiterer Ausgestaltung der Erfindung ist der Verriegelungseinrichtung eine Steuereinrichtung zugeordnet, die mit einer Bewegungsbahn des Mitnehmers derart gekoppelt ist, dass die Verriegelungseinrichtung lösbar ist abhängig von einer Bewegung des Mitnehmers in einem Bereich, in dem das Flächengebilde zumindest weitgehend vollständig auf die Wickelwelle aufgewickelt ist. Die Steuereinrichtung ist vorzugsweise mechanisch ausgeführt. Sie kann aber auch elektrisch, hydraulisch oder pneumatisch auf die Verriegelungseinrichtung einwirken. Die Mitnehmer, die die gegenüberliegenden Stirnseiten des Auszugprofils mitnehmen, befinden sich zwangläufig im Bereich der Aufnahmestruktur, wenn das Flächengebilde zumindest weitgehend vollständig auf die Wickelwelle aufgewickelt ist. Denn dann ist das Auszugprofil ebenfalls in Richtung der Aufnahmestruktur so weit zurückgezogen, dass es unmittelbar im Bereich der Aufnahmestruktur positioniert ist. Die entsprechenden Stirnseiten des Auszugprofils tauchen dann in die Fangkulisse ein, wobei sich gleichzeitig die Mitnehmer zwangsläufig in den Umlenkbereich der jeweiligen Führungsspur hineinbewegen.

In weiterer Ausgestaltung der Erfindung ist die Fangkulisse in Längsrichtung des Laderaumes von der Wickelwelle weg offen und ist zumindest weitgehend parallel zu dem Führungsabschnitt für den Mitnehmer ausgerichtet. Der jeweilige Führungsabschnitt für den jeweiligen Mitnehmer entspricht bei der Ausgestaltung der Schutzvorrichtung als Laderaumabdeckung dem Bereich der jeweiligen Führungsspur, der sich in Längsrichtung des Laderaumes etwa horizontal im Bereich jeweils einer Seitenwandung des Laderaumes erstreckt.

In weiterer Ausgestaltung der Erfindung ist die Fangkulisse in der Aufnahmestruktur integriert. Vorzugsweise sind zwei identisch gestaltete Fangkulissen an gegenüberliegenden Stirnseiten der Aufnahmestruktur vorgesehen und als Abschnitte von Seitenteilen der Aufnahmestruktur gestaltet.

In weiterer Ausgestaltung der Erfindung weist die Steuereinrichtung ein Kurbelgetriebe auf, das mit einer Sperrklinke der Verriegelungseinrichtung zusammenwirkt, wobei die Sperrklinke die Aufnahmestruktur in der Funktionsstellung formschlüssig sichert. Das Kurbelgetriebe ist vorzugsweise benachbart zu dem jeweiligen Umlenkbereich der Führungsspur für den jeweiligen Mitnehmer positioniert. Das Kurbelgetriebe weist wenigstens ein Steuerteil auf, das in eine Bewegungsbahn des jeweiligen Mitnehmers in den Umlenkbereich hineinragt, um eine zwangsläufige Betätigung des Kurbelgetriebes zu erzielen, sobald der Mitnehmer in den Umlenkbereich hineinverfährt. Durch Lösen der Sperrklinke wird die Aufnahmestruktur freigegeben, so dass sie aus ihrer oberen Funktionsstellung in Hochrichtung des Laderaumes nach unten verlagert werden kann.

In weiterer Ausgestaltung der Erfindung ist die Aufnahmestruktur auf jeder Stirnseite in einer laderaumfesten Führungsbahn höhenverlagerbar geführt, die parallel zu dem Verlagerungsabschnitt für den jeweiligen Mitnehmer verläuft. Dadurch kann die Aufnahmestruktur gemeinsam mit dem Absenken der gegenüberliegenden Mitnehmer in dem jeweiligen Verlagerungsabschnitt der Führungsspur nach unten oder nach oben in Hochrichtung des Laderaumes mitgenommen werden.

In weiterer Ausgestaltung der Erfindung ist jeder Mitnehmer für eine lösbare Mitnahme der Stirnseite des Auszugprofils ausgestaltet. Diese Ausgestaltung ist vorteilhaft, um Beschädigungen bei einem unbeabsichtigten Auftreffen des Auszugprofils auf ein Hindernis im Laderaum zu vermeiden.

In weiterer Ausgestaltung der Erfindung ist ein Antriebssystem vorgesehen, das für jeden Mitnehmer ein flexibles Antriebskabel aufweist, um die Mitnehmer synchron zueinander in Längsrichtung und in Hochrichtung der jeweiligen Führungsspur zu verlagern. Das Antriebssystem umfasst vorzugsweise wenigstens einen elektrischen Antriebsmotor, der über geeignete Getriebe die beiden flexiblen Antriebskabel antreibt.

In weiterer Ausgestaltung der Erfindung kreuzen die Fangkulisse und der in Hochrichtung erstreckte Verlagerungsabschnitt der Führungsspur einander. Hierdurch wird das Auszugprofil mit seinen gegenüberliegenden Stirnseiten zwangsläufig formschlüssig in den Fangkulissen der Aufnahmestruktur gesichert, sobald die Mitnehmer und demzufolge die Stirnseiten der Auszugprofile in den Umlenkbereichen der Führungsspuren nach unten in Richtung der Verlagerungsabschnitte umgelenkt werden und in diesen Verlagerungsabschnitten verlagert werden.

In weiterer Ausgestaltung der Erfindung sind die Führungsbahn für die Stirnseite der Aufnahmestruktur und der Verlagerungsabschnitt für den jeweiligen Mitnehmer in einer gemeinsamen Profilschienenanordnung integriert. Vorzugsweise sind die Führungsbahn und der Verlagerungsabschnitt in Querrichtung des Laderaumes gesehen hintereinander angeordnet, sofern die Aufnahmestruktur ebenfalls in Querrichtung des Laderaumes erstreckt ist und das Flächengebilde in Längsrichtung des Laderaumes ausziehbar ist.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1 bis 3: zeigen schematisch einen Fahrzeuginnenraum eines Personenkraftwagens mit einer Ausführungsform einer erfindungsgemäßen Schutzvorrichtung für einen Laderaum des Personenkraftwagens in unterschiedlichen Funktionsstel-lungen,
- Fig. 4 bis 6: schematisch in einem Ausschnitt einen Teilbereich der Schutzvorrichtung nach den Fig. 1 bis 3 in unterschiedlichen Funktionsstellungen,
- Fig. 7: in perspektivischer Darstellung die Schutzvorrichtung nach Fig. 6,
- Fig. 8: die Funktionsstellung gemäß Fig. 7 unter Weglassung von Teilen der Schutzvorrichtung,
- Fig. 9 bis 14: die Schutzvorrichtung nach den Fig. 1 bis 8 in verschiedenen Funktionsstel-lungen innerhalb des Laderaumes,
- Fig. 15: in vergrößerter, perspektivischer Explosionsdarstellung einen Teilbereich der Schutzvorrichtung nach den Fig. 1 bis 14,
- Fig. 16: in perspektivischer Darstellung einen stirnseitigen Teilbereich eines Kassettengehäuses der Schutzvorrichtung nach den Fig. 1 bis 15 und
- Fig. 17: den Teilbereich gemäß Fig. 16 in anderer perspektivischer Darstellung.

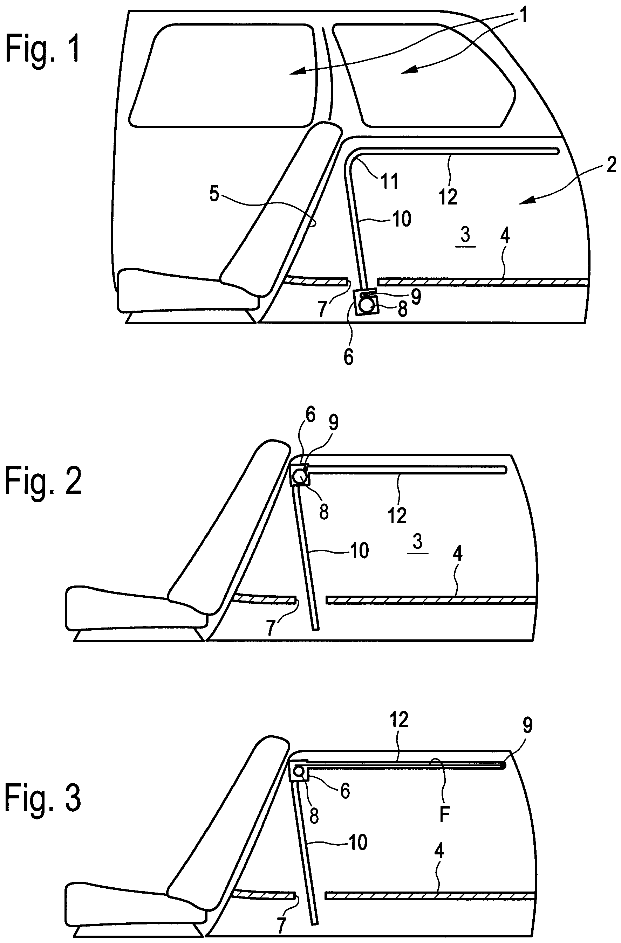

Ein Personenkraftwagen weist gemäß den Fig. 1 bis 3 einen Fahrzeuginnenraum 1 auf, der in einem Heckbereich einen Laderaum 2 umfasst. Der Laderaum 2 ist an seinen gegenüberliegenden Längsseiten durch jeweils eine Seitenwandung 3 des Fahrzeuginnenraumes begrenzt. Nach hinten ist der Laderaum 2 in nicht näher dargestellter Weise durch eine Heckklappe oder eine Hecktür begrenzt. Nach vorne ist der Laderaum 2 bis auf Höhe einer Fahrzeugbrüstung durch eine Rückenlehnenanordnung 5 einer Fondsitzbank begrenzt. Der Laderaum 2 weist einen Laderaumboden 4 auf, der unmittelbar hinter der Rückenlehnenanordnung 5 mit einer Vertiefung 7 versehen ist, die durch einen nicht dargestellten Deckel verschließbar sein kann. Die Vertiefung 7 ist derart gestaltet, dass ein als Aufnahmestruktur dienendes Kassettengehäuse 6 einer Schutzvorrichtung für den Laderaum 2 in die Vertiefung 7 hinein abgesenkt werden kann. Vorzugsweise schließt in abgesenkter Ruheposition eine Oberseite des Kassettengehäuses 6 bündig mit einer Oberseite des Laderaumbodens 4 ab, wobei das Kassettengehäuse 6 gleichzeitig in dieser Ruheposition die Vertiefung 7 zumindest weitgehend vollständig ausfüllt. Aufgrund der schematischen Darstellung gemäß Fig. 1 ist dies aus der Zeichnung nicht klar erkennbar.

Das Kassettengehäuse 6 erstreckt sich in Fahrzeugquerrichtung und damit in Querrichtung des Laderaumes 2. Das Kassettengehäuse 6 ist in Hochrichtung des Laderaumes sowie gemäß den Fig. 1 und 3 mit geringfügiger zusätzlicher Komponente in Längsrichtung des Laderaumes zwischen der unteren Ruheposition gemäß Fig. 1 und einer oberen Funktionsposition verlagerbar, wie nachfolgend näher beschrieben wird. In dem Kassettengehäuse 6 ist eine Wickelwelle 8 drehbar gelagert. Auf der Wickelwelle 8 ist ein flexibles Flächengebilde F in Form einer Abdeckplane auf- und abwickelbar gehalten. Das Flächengebilde F ist in der Funktionsposition des Kassettengehäuses 6 aus einem nicht näher bezeichneten Längsschlitz des Kassettengehäuses 6 in Längsrichtung des Laderaumes 2 nach hinten zu dem Heckbereich etwa horizontal ausziehbar, um den Laderaum 2 zu überdecken und so einen Blick von außen auf den Laderaum 2 zu versperren. Der Wickelwelle 8 ist eine als Rückholfeder dienende Wickelfeder zugeordnet, die auf die Wickelwelle 8 ein permanentes Drehmoment in Aufwickelrichtung ausübt. Das Flächengebilde F weist an seinem in Auszugrichtung vorderen Stirnendbereich ein formstabiles Auszugprofil 9 auf, das sich über die gesamte Breite des Flächengebildes F erstreckt und an seinen gegenüberliegenden Stirnseiten in jeweils eine Führungsspur 10 bis 12 im Bereich der jeweiligen Seitenwandung 3 des Laderaumes 2 hineinragt.

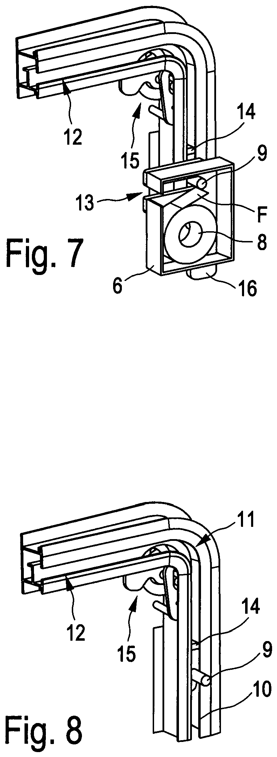

Anhand der Fig. 1 bis 14 ist erkennbar, dass die Führungsspur im Bereich von jeder der beiden gegenüberliegenden Seitenwandungen 3 einen im Wesentlichen in Hochrichtung des Laderaumes 2 erstreckten Verlagerungsabschnitt 10, einen an den Verlagerungsabschnitt 10 oben anschließenden Umlenkbereich 11 sowie einen an den Umlenkbereich 11 in Längsrichtung des Laderaumes 2 zu dem Heckbereich hin anschließenden Führungsabschnitt 12 aufweist. Der Verlagerungsabschnitt 10, der Umlenkabschnitt 11 und der Führungsabschnitt 12 gehen fluchtend ineinander über, wobei der Umlenkabschnitt kreisbogenförmig oder kreisbogenartig gestaltet ist. Der Führungsabschnitt 12 der jeweiligen Führungsspur erstreckt sich etwa horizontal in Längsrichtung des Laderaumes zu dem Heckbereich hin nach hinten. Die durch die Abschnitte gebildete Führungsspur im Bereich jeder Seitenwandung 3 des Laderaumes 2 ist an entsprechenden Abschnitten der Karosserietragstruktur des Personenkraftwagens befestigt und so stationär im Laderaum 2 angeordnet. Die jeweilige Führungsspur im Bereich der gegenüberliegenden Seitenwandungen 3 wird jeweils gebildet durch eine Profilschienenanordnung aus Metall, vorzugsweise einer Leichtmetalllegierung, deren Gestaltung anhand der Fig. 7 und 8 sowie 15 bis 17 erkennbar ist. Die jeweilige Profilschienenanordnung ist vorteilhaft - in nicht näher dargestellter Weise - hinter einer entsprechenden Seitenverkleidung der jeweiligen Seitenwandung 3 angeordnet, so dass entsprechende Funktionsteile der Schutzvorrichtung, soweit sie die Führung des Kassettengehäuses 6 oder die Führung des Auszugprofils 9 betreffen, im Wesentlichen durch die entsprechende Seitenverkleidung verdeckt sind.

Das Auszugprofil 9 ragt an seinen gegenüberliegenden Stirnseiten in die jeweilige Führungsspur 10 bis 12 der gegenüberliegenden Seitenwandungen 3 hinein, um in den beiden Führungsspuren längs der Führungsspuren parallel verlagert werden zu können. Zur synchronisierten Verlagerung der beiden gegenüberliegenden Stirnseiten des Auszugprofils 9 ist in jeder Führungsspur 10 bis 12 jeweils ein Mitnehmer 14 angeordnet, der linearbeweglich in der jeweiligen Führungsspur 10 bis 12 verfahrbar ist. Der jeweilige Mitnehmer 14 nimmt das entsprechende Stirnende des Auszugprofils 9 formschlüssig auf. Jeder Mitnehmer 14 ist jedoch derart gestaltet, dass das Auszugprofil 9 bei einer starken Belastung, die insbesondere durch ein im Laderaum befindliches Hindernis bei einer Verfahrbewegung des Auszugprofils 9 auftreten kann, von den Mitnehmern 14 gelöst werden kann. Hierdurch wird vermieden, dass übermäßige Kräfte, die auf das Auszugprofil 9 wirken können, zu einer Beschädigung des Auszugprofils 9 oder der Führungsspuren 10 bis 12 führen können.

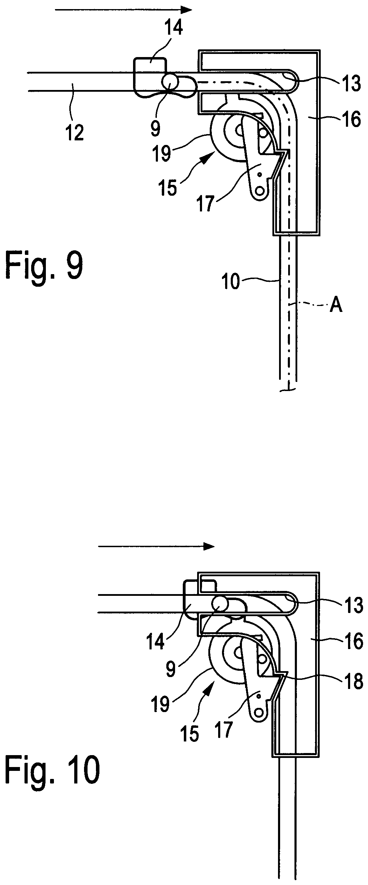

Die beiden Mitnehmer 14 sind mithilfe jeweils eines Antriebskabels A in der jeweiligen Führungsspur längsverlagerbar. Das jeweilige Antriebskabel A ist anhand der Fig. 9 und 12, 13 schematisch dargestellt. Die beiden Antriebskabel A sind als flexible Gewindewellen ausgeführt, die auch als Flexwellen bezeichnet werden. Die beiden Antriebskabel A sind Teil eines Antriebssystems, das einen elektrischen Antriebsmotor umfasst, der über ein entsprechendes Schneckengetriebe die Antriebskabel A synchron zueinander antreibt. Die Antriebskabel A sind zug- und drucksteif ausgeführt und flexibel gestaltet, so dass sie durch den Umlenkbereich 11 jeder Führungsspur 10 bis 12 hindurch gekrümmt verlaufen können.

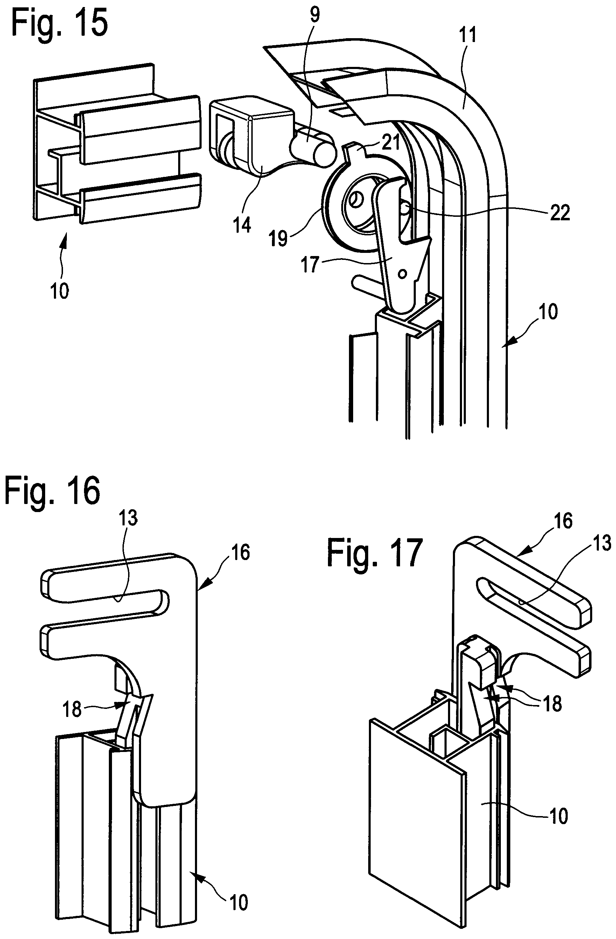

Im Bereich der gegenüberliegenden Stirnseiten des Kassettengehäuses 6 ist am Kassettengehäuse 6 jeweils ein Führungsschlitten 16 befestigt, der parallel zu dem Verlagerungsabschnitt 10 der Führungsspur 10, 11, 12 in Hochrichtung des Laderaumes 2 in einem entsprechenden Schienenabschnitt der Profilschienenanordnung gleitbeweglich geführt ist (Fig. 16 und 17). Der jeweilige Führungsschlitten 16 bildet jeweils ein Seitenteil des Kassettengehäuses 6 und ist fest mit dem Kassettengehäuse 6 verbunden. Der Führungsschlitten 16 weist auf Höhe des Längsschlitzes des Kassettengehäuses 6 eine Fangkulisse 13 auf, die dazu vorgesehen ist, das zugeordnete Stirnende des Auszugprofils 9 aufzunehmen. In der Funktionsposition des Kassettengehäuses 6, in der das Flächengebilde F etwa horizontal in Längsrichtung des Laderaumes nach hinten ausziehbar ist, ist die schlitzartige Fangkulisse 13 jedes Führungsschlittens 16 des Kassettengehäuses 6 fluchtend zu dem Führungsabschnitt 12 der Führungsspur 10 bis 12 jeder Seitenwandung 3 ausgerichtet.

Das Auszugprofil 9 kann daher, wenn das Flächengebilde F auf die Wickelwelle 8 innerhalb des Kassettengehäuses 6 aufgewickelt wird, in den Längsschlitz des Kassettengehäuses 6 und damit auch in die beiden zum Heckbereich hin nach hinten offenen Fangkulissen 13 der als Seitenteile für das Kassettengehäuse 6 dienenden Führungsschlitten 16 hineintauchen.

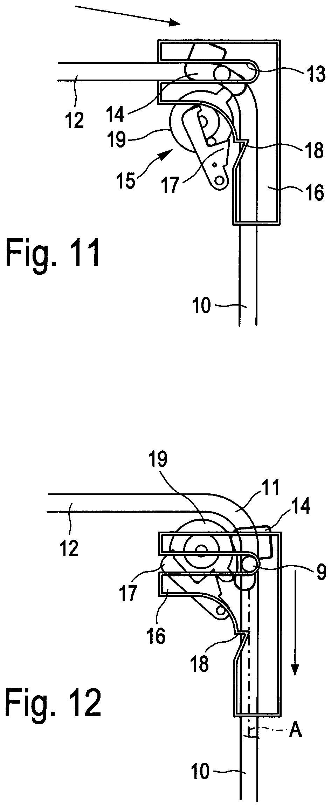

Das Kassettengehäuse 6 wird in seiner Funktionsposition gemäß den Fig. 2 und 3 durch zwei Verriegelungseinrichtungen gesichert, die Teil von zwei Kopplungseinrichtungen 15 sind. Jede Kopplungseinrichtung 15 ist auf Höhe des Umlenkabschnittes 11 der jeweiligen Führungsspur 10 bis 12 positioniert. Zu der jeweiligen Kopplungseinrichtung 15 zählt auch die jeweilige Fangkulisse 13 des Kassettengehäuses 6. Die beiden gegenüberliegenden Kopplungseinrichtungen wie auch die beiden gegenüberliegenden Verriegelungseinrichtungen sind identisch zueinander gestaltet. Die beiden Verriegelungseinrichtungen werden über entsprechende mechanische Steuereinrichtungen 19, 21, 22 der jeweiligen Kopplungseinrichtungen 15 synchron aus einer Verriegelungsstellung in eine Lösestellung überführt. Die beiden Verriegelungseinrichtungen dienen dazu, das Kassettengehäuse 6 in der Funktionsposition gemäß den Fig. 2 und 3 zu sichern. Im Bereich der die Seitenteile des Kassettengehäuses 6 bildenden Führungsschlitten 16 ist jeweils eine keilförmige Verriegelungsaufnahme 18 vorgesehen, in die jeweils eine Sperrklinke 17 der Verriegelungseinrichtung einrastet. Die Sperrklinke 17 ist, wie anhand der Fig. 9 bis 15 erkennbar ist, schwenkbeweglich gelagert zwischen einer in die Verriegelungsaufnahme 18 eingreifenden Verriegelungsstellung und einer die Verriegelungsaufnahme 18 freigebenden Freigabestellung (siehe Fig. 11 und 12). Die entsprechende Sperrklinke 17 ist in Richtung ihrer Verriegelungsstellung federbelastet durch eine Rückstellfeder, die nicht näher dargestellt ist.

Sobald die Sperrklinken in ihre Lösestellung überführt sind, kann das Kassettengehäuse 6 mit seinen beiden Seitenteilen in Form der Führungsschlitten 16 parallel zu dem Verlagerungsabschnitt 10 für den jeweiligen Mitnehmer 14 in einen entsprechenden Schienenabschnitt der Profilschienenanordnung in Hochrichtung des Laderaumes verschoben werden. Durch die gegenüberliegenden Führungsschlitten 16 ist gewährleistet, dass das Kassettengehäuse 6 in Hochrichtung parallel verlagert wird.

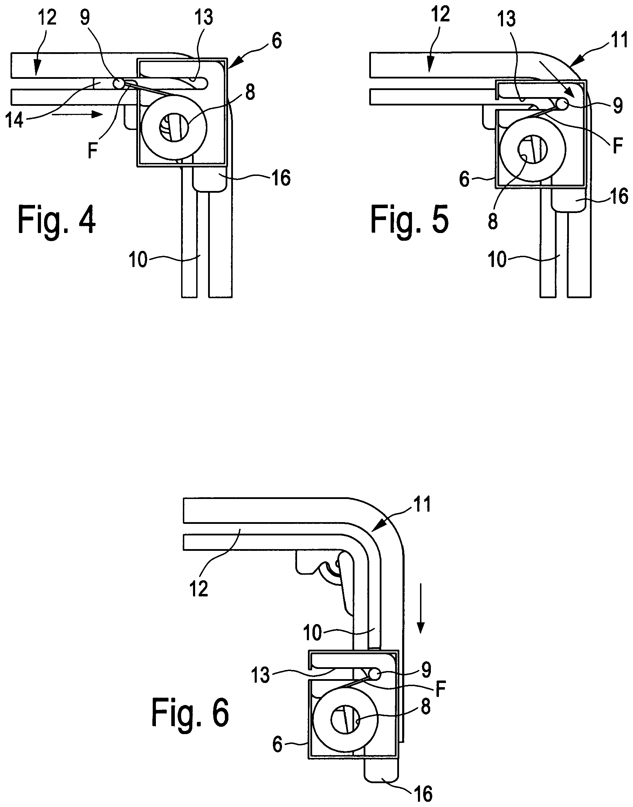

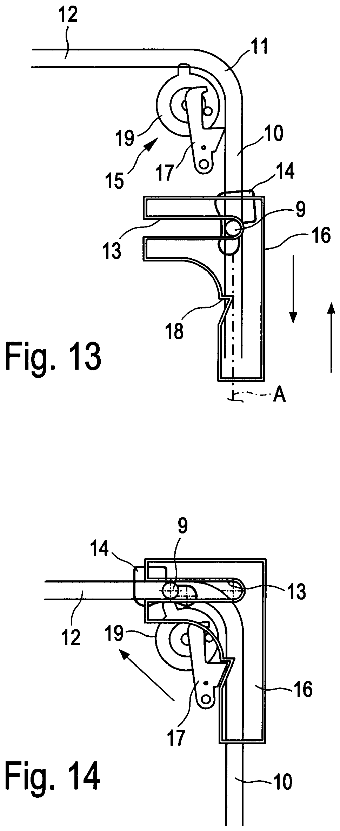

Mithilfe einer nachfolgend näher beschriebenen Zwangssteuerung wird das Kassettengehäuse 6 in Hochrichtung des Laderaumes ausschließlich in Abhängigkeit von entsprechenden Bewegungen der gegenüberliegenden Mitnehmer 14 im Bereich der Umlenkabschnitte 11 und der Verlagerungsabschnitte 10 bewegt. Hierzu weist die Kopplungseinrichtung 15 im Bereich jedes Umlenkabschnittes 11 die mechanische Steuereinrichtung auf, die eine Bewegung des jeweiligen Mitnehmers 14 zwangsläufig mit einer entsprechenden Öffnungsbewegung der jeweiligen Sperrklinke 17 koordiniert. Hierzu weist die Steuereinrichtung eine Kurbelscheibe 19 auf, die einen Steuernocken 21 aufweist, der radial von der Kurbelscheibe abragt und in die Bewegungsbahn des Mitnehmers 14 oder des Auszugprofils 9 hineinragt. Der Kurbelscheibe 19 ist zudem ein axial abragender Kurbelzapfen 22 - bezogen auf eine Drehachse der Kurbelscheibe 19 - zugeordnet, der mit einem Hebelabschnitt der Sperrklinke 17 in Kontakt ist. Sobald der Mitnehmer 14 mit dem Auszugprofil 9 in dem Führungsabschnitt 12 in Längsrichtung des Laderaumes nach vorne verschoben wird (siehe Fig. 9 und 10), taucht zwangsläufig kurz vor Erreichen der aufgewickelten Ruhestellung des Flächengebildes F das Auszugprofil 9 mit seinen gegenüberliegenden Stirnenden in die Fangkulissen 13 der Führungsschlitten 16 ein. Beim weiteren Hineinverlagern des Auszugprofils 9 in die Fangkulissen 13 hinein - bei entsprechender Weiterbewegung der Mitnehmer 14 in die Umlenkabschnitte 11 - wird der Steuernocken gemäß den Darstellungen nach den Fig. 9 bis 15 im Uhrzeigersinn verdreht, wodurch der Kurbelzapfen 22 zwangsläufig die Sperrklinke 17 in die Öffnungsstellung überführt. Dadurch kommt das Kassettengehäuse 6 aus der Verriegelungsstellung frei und kann in der entsprechenden Führungsbahn, die parallel zu dem Verlagerungsabschnitt 10 jeder Führungsspur nach unten verläuft, abgesenkt werden. Dadurch, dass das Auszugprofil 9 mit seinen gegenüberliegenden Stirnenden weiterhin in dem jeweiligen Mitnehmer 14 und in der Führungsspur gefangen ist und sich darüber hinaus die Fangkulissen 13 der Führungsschlitten 16 mit der Führungsspur im Bereich des Umlenkabschnittes 11 und des Verlagerungsabschnittes 10 kreuzen, ist das Auszugprofil 9 in dem Kassettengehäuse 6, genauer gesagt im Endbereich der jeweiligen Fangkulisse 13, gefangen. Dadurch stützt das Auszugprofil 9 das Kassettengehäuse 6 zwangsläufig im Bereich der Mitnehmer 14 ab, so dass das Kassettengehäuse 6 zwangsgeführt gemeinsam mit den Mitnehmern 14 nach unten abgesenkt oder auch in entgegengesetzter Richtung (siehe Fig. 13 und 14) wieder angehoben wird. Da sich bei einem erneuten Verlagern des Auszugprofils 9 aus dem Verlagerungsabschnitt 10 nach oben in den Umlenkabschnitt 11 hinein und in Richtung des Führungsabschnittes 12 zwangsläufig die Kurbelscheibe 19 über den Steuernocken 21 wieder in die Ausgangslage zurückstellt, kann die entsprechende Rückstellfeder die jeweilige Sperrklinke 17 ebenfalls wieder in die Verriegelungsstellung zurückstellen, wodurch die Führungsschlitten 16 wieder in der Funktionsposition des Kassettengehäuses 6 formschlüssig gesichert werden. Nun kann das Auszugprofil 9 über die Mitnehmer 14 wieder in einfacher Weise aus dem Kassettengehäuse 6 und aus den Fangkulissen 13 in Richtung des Heckbereichs nach hinten herausbewegt werden. Die Ausgangslage gemäß den Fig. 4 und 9 ist so wiederhergestellt.

## Patentansprüche

1. Schutzvorrichtung für einen Laderaum eines Kraftfahrzeugs mit einer formstabilen Aufnahmestruktur (6), in der eine Wickelwelle (8) drehbar gelagert ist, auf der ein flexibles Flächengebilde (F) auf- und abwickelbar gehalten ist, das an einem in Abwickelrichtung vorderen Stirnendbereich mit einem formstabilen Auszugprofil (9) versehen ist, das an seinen gegenüberliegenden Stirnseiten mit jeweils einem Mitnehmer (14) verbunden ist, der in einem in Längsrichtung des Laderaumes (2) erstreckten Führungsabschnitt (12) einer laderaumfesten Führungsspur (10 bis 12) linearbeweglich geführt ist, **dadurch gekennzeichnet, dass** die Aufnahmestruktur (6) in Hochrichtung des Laderaumes (2) verlagerbar ist, und dass jede Führungsspur (10 bis 12) einen Umlenkbereich (11) sowie einen in Hochrichtung des Laderaumes (2) erstreckten Verlagerungsabschnitt (10) aufweist, entlang derer der Mitnehmer (14) umlenkbar und in Hochrichtung verfahrbar ist, und dass die Aufnahmestruktur (6) eine Kopplungseinrichtung aufweist, mittels der die Aufnahmestruktur (6) abhängig von einer Position des Mitnehmers (14) gemeinsam mit dem Mitnehmer (14) höhenverlagerbar ist.

2. Schutzvorrichtung nach Anspruch 1, **dadurch gekennzeichnet, dass** die Kopplungseinrichtung eine Fangkulisse (13) für das Auszugprofil (9) aufweist, in die das Auszugprofil (9) eintaucht abhängig von der Position des Mitnehmers (14).

3. Schutzvorrichtung nach Anspruch 1 oder 2, **dadurch gekennzeichnet, dass** die Kopplungseinrichtung eine Verriegelungseinrichtung aufweist, die die Aufnahmestruktur (6) in einer Funktionsstellung sichert.

4. Schutzvorrichtung nach Anspruch 3, **dadurch gekennzeichnet, dass** der Verriegelungseinrichtung eine mechanische Steuereinrichtung zugeordnet ist, die mit einer Bewegungsbahn des Mitnehmers (14) derart gekoppelt ist, dass die Verriegelungseinrichtung lösbar ist abhängig von einer Bewegung des Mitnehmers (14) in einem Bereich, in dem das Flächengebilde (F) zumindest weitgehend vollständig auf die Wickelwelle (8) aufgewickelt ist.

5. Schutzvorrichtung nach einem der vorhergehenden Ansprüche, **dadurch gekennzeichnet, dass** die Fangkulisse (13) in Längsrichtung des Laderaumes (2) von der Wickelwelle (8) weg offen ist und zumindest weitgehend parallel zu dem Führungsabschnitt (12) für den Mitnehmer (14) ausgerichtet ist.

6. Schutzvorrichtung nach Anspruch 5, **dadurch gekennzeichnet, dass** die Fangkulisse in der Aufnahmestruktur integriert ist.

7. Schutzvorrichtung nach Anspruch 4, **dadurch gekennzeichnet, dass** die Steuereinrichtung ein Kurbelgetriebe aufweist, das mit einer Sperrklinke (17) der Verriegelungseinrichtung zusammenwirkt, wobei die Sperrklinke (17) die Aufnahmestruktur (6) in der Funktionsstellung formschlüssig sichert.

8. Schutzvorrichtung nach einem der vorhergehenden Ansprüche, **dadurch gekennzeichnet, dass** die Aufnahmestruktur (6) auf jeder Stirnseite in einer laderaumfesten Führungsbahn höhenverlagerbar geführt ist, die parallel zu dem Verlagerungsabschnitt (10) für den jeweiligen Mitnehmer (14) verläuft.

9. Schutzvorrichtung nach einem der vorhergehenden Ansprüche, **dadurch gekennzeichnet, dass** jeder Mitnehmer (14) für eine lösbare Mitnahme der Stirnseite des Auszugprofils (9) ausgestaltet ist.

10. Schutzvorrichtung nach einem der vorhergehenden Ansprüche, **dadurch gekennzeichnet, dass** ein Antriebssystem vorgesehen ist, das für jeden Mitnehmer (14) ein flexibles Antriebskabel (A) aufweist, um die Mitnehmer (14) synchron zueinander in Längsrichtung und in Hochrichtung der jeweiligen Führungsspur (10 bis 12) zu verlagern.

11. Schutzvorrichtung nach einem der vorhergehenden Ansprüche, **dadurch gekennzeichnet, dass** die Fangkulisse (13) und der in Hochrichtung erstreckte Verlagerungsabschnitt (10) der Führungsspur (10 bis 12) einander kreuzen.

12. Schutzvorrichtung nach Anspruch 8, **dadurch gekennzeichnet, dass** die Führungsbahn für die Stirnseite der Aufnahmestruktur (6) und der Verlagerungsabschnitt 10 für den Mitnehmer (14) in einer gemeinsamen Profilschienenanordnung integriert sind.

## Claims

1. Protection device for a luggage compartment of an automotive vehicle, comprising a dimensionally stable accommodation structure (6), wherein a winding shaft (8) is rotatably mounted, on which a flexible planar structure (F) is held to be windable and unwindable, which planar structure is provided with a dimensionally stable pull-out profile (9) on a face end region that is in front in the unwinding direction and on each of its opposite face sides is connected to a respective entrainer (14) which is guided for linear movement in a guiding section (12) extending in the longitudinal direction of the luggage compartment (2) of a guiding track (10 to 12) fixed to the luggage compartment, **characterized in that** the accommodation structure (6) is displaceable in the vertical direction of the luggage compartment (2), and **in that** each guiding track (10 to 12) includes a deflection portion (11) and a displacement section (10) extending in the vertical direction of the luggage compartment (2), along which the entrainer (14) is deflectable and movable in the vertical direction, and **in that** the accommodation structure (6) includes a coupling device, by means of which the accommodation structure (6) is displaceable in height together with the entrainer (14) in response to a position of the entrainer (14).

2. Protection device according to claim 1, **characterized in that** the coupling device includes a catch link (13) for the pull-out profile (9), and the pull-out profile (9) plunges into the link in response to the position of the entrainer (14).

3. Protection device according to claim 1 or 2, **characterized in that** the coupling device includes a locking device which secures the accommodation structure (6) in a functional condition.

4. Protection device according to claim 3, **characterized in that** the locking device is associated with a mechanical control device which is coupled to a trajectory of the entrainer (14) such that the locking device is releasable in response to a move of the entrainer (14) in a region where the planar structure (F) is at least largely completely wound onto the winding shaft (8).

5. Protection device according to any of the preceding claims, **characterized in that** the catch link (13) is open in the longitudinal direction of the luggage compartment (2) away from the winding shaft (8), and is oriented at least largely in parallel to the guiding section (12) for the entrainer (14).

6. Protection device according to claim 5, **characterized in that** the catch link is integrated in the accommodation structure.

7. Protection device according to claim 4, **characterized in that** the control device includes a crank mechanism cooperating with a ratchet (17) of the locking device, wherein the ratchet (17) secures the accommodation structure (6) in the functional condition in a form-fitting manner.

8. Protection device according to any of the preceding claims, **characterized in that** the accommodation structure (6) is guided, on each face side, in a vertically displaceable manner in a guiding path fixed to the luggage compartment, which path extends in parallel to the displacement section (10) for the respective entrainer (14).

9. Protection device according to any of the preceding claims, **characterized in that** each entrainer (14) is configured for releasable entrainment of the face side of the pull-out profile (9).

10. Protection device according to any of the preceding claims, **characterized in that** a drive system is provided, which includes a flexible drive cable (A) for each entrainer (14), in order to displace the entrainers (14) in a synchronized manner in the longitudinal direction and in the vertical direction of the respective guiding track (10 to 12).

11. Protection device according to any of the preceding claims, **characterized in that** there is an intersection of the catch link (13) and the displacement section (10) of the guiding track (10 to 12) extended in the vertical direction.

12. Protection device according to claim 8, **characterized in that** the guiding path for the face side of the accommodation structure (6) and the displacement section (10) for the entrainer (14) are integrated in a common profile rail arrangement.

## Revendications

1. Dispositif de protection d'espace de chargement de véhicule automobile avec une structure de logement (6) dimensionnellement stable, dans laquelle un arbre enrouleur (8) est monté à rotation, sur l'arbre une structure planaire flexible (F) est retenue pour enrouler et dérouler, la structure planaire est pourvue d'un profil de tirage (9) dimensionnellement stable dans une zone de son extrémité frontal de devant dans la direction de déroulement, ledit profil de tirage est raccordé à un entraîneur (14) respectif sur ses faces frontales opposées, l'entraîneur est guidé pour un mouvement linéaire dans une section de guidage (12) d'une voie de guidage (10 à 12) fixe de l'espace de chargement s'étendant dans la direction longitudinale de l'espace de chargement (2), **caractérisé en ce que** la structure de logement (6) est déplaçable dans la direction verticale de l'espace de chargement (2), et **en ce que** chacune des voies de guidage (10 à 12) comprend une partie de détournement (11) ainsi qu'une section de déplacement (10) s'étendant dans la direction verticale de l'espace de chargement (2), le long desquelles l'entraîneur (14) est détournable et déplaçable dans la direction verticale, et **en ce que** la structure de logement (6) comprend un dispositif de couplage, au moyen duquel la structure de logement (6) peut être déplacée en hauteur conjointement avec l'entraîneur (14) en fonction d'une position de l'entraîneur (14).

2. Dispositif de protection selon la revendication 1, **caractérisé en ce que** le dispositif de couplage comporte un dispositif coulissant de retenue (13) pour le profil de tirage (9), dans lequel le profil de tirage (9) entre en fonction de la position de l'entraîneur (14).

3. Dispositif de protection selon la revendication 1 ou 2, **caractérisé en ce que** le dispositif de couplage comporte un dispositif de verrouillage pour fixer la structure de logement (6) dans une condition fonctionnelle.

4. Dispositif de protection selon la revendication 3, **caractérisé en ce qu'**un dispositif de commande mécanique est associé au dispositif de verrouillage et couplé avec une trajectoire de l'entraîneur (14) de telle manière que le dispositif de verrouillage est amovible en fonction d'un mouvement de l'entraîneur (14) dans une zone où la structure planaire (F) est enroulée au moins largement complètement sur l'arbre enrouleur (8).

5. Dispositif de protection selon l'une quelconque des revendications précédentes, **caractérisé en ce que** le dispositif coulissant de retenue (13) est ouvert dans la direction longitudinale de l'espace de chargement (2) éloigné de l'arbre enrouleur (8) et est orienté au moins largement parallèlement à la section de guidage (12) pour l'entraîneur (14).

6. Dispositif de protection selon la revendication 5, **caractérisé en ce que** le dispositif coulissant de retenue est intégré dans la structure de logement.

7. Dispositif de protection selon la revendication 4, **caractérisé en ce que** le dispositif de commande comporte une transmission à manivelle coopérant avec un cliquet d'arrêt (17) du dispositif de verrouillage, dans lequel le cliquet d'arrêt (17) arrête la structure de logement (6) dans la condition fonctionnelle par complémentarité de formes.

8. Dispositif de protection selon l'une quelconque des revendications précédentes, **caractérisé en ce que** la structure de logement (6) est guidée pour déplacement en hauteur sur chaque face frontale dans une voie de guidage fixe de l'espace de chargement s'étendant parallèlement à la section de déplacement (10) pour l'entraîneur (14) respectif.

9. Dispositif de protection selon l'une quelconque des revendications précédentes, **caractérisé en ce que** chaque entraîneur (14) est configuré pour un entraînement amovible de la face frontale du profil de tirage (9).

10. Dispositif de protection selon l'une quelconque des revendications précédentes, **caractérisé en ce qu'**un système d'entraînement est fourni et comprend un câble de commande (A) flexible pour chaque entraîneur (14) afin de déplacer les entraîneurs (14) en synchronisation dans la direction longitudinale et la direction verticale de la voie de guidage (10 à 12) respective.

11. Dispositif de protection selon l'une quelconque des revendications précédentes, **caractérisé en ce que** le dispositif coulissant de retenue (13) et la section de déplacement (10) de la voie de guidage (10 à 12) s'étendant dans la direction verticale se croisent l'un l'autre.

12. Dispositif de protection selon la revendication 8, **caractérisé en ce que** la voie de guidage pour la face frontale de la structure de logement (6) et la section de déplacement (10) pour l'entraîneur (14) sont intégrées dans un arrangement de rails profilés commun.
